## Europäisches Patentamt
## European Patent Office
## Office européen des brevets

(19)

(11) Numéro de publication: **0 026 714**
**B1**

(12)

# FASCICULE DE BREVET EUROPEEN

(45) Date de publication du fascicule du brevet: 08.05.85

(51) Int. Cl.⁴: **G 21 C 1/08, G 21 C 19/30**

(21) Numéro de dépôt: **80401379.5**

(22) Date de dépôt: **30.09.80**

(54) **Dispositif de purge du circuit primaire d'un réacteur à eau sous pression.**

(30) Priorité: 02.10.79 FR 7924494

(43) Date de publication de la demande:
08.04.81 Bulletin 81/14

(45) Mention de la délivrance du brevet:
08.05.85 Bulletin 85/19

(84) Etats contractants désignés:
BE CH DE GB IT LI

(56) Documents cités:
FR-A-1 516 793
FR-A-2 123 287
GB-A-1 131 548
NL-A-6 605 387
US-A-3 060 110
US-A-3 722 578

(73) Titulaire: COMMISSARIAT A L'ENERGIE
ATOMIQUE Etablissement de Caractère
Scientifique Technique et Industriel
B.P. 510
F-75752 Paris Cedex 15 (FR)

(72) Inventeur: Costes, Didier
11-19, Avenue du Château
F-92190 Meudon (FR)
Inventeur: Velin, François
9, Allée des Peupliers
F-78350 Les Loges en Josas (FR)

(74) Mandataire: Mongrédien, André et al
c/o BREVATOME 25, rue de Ponthieu
F-75008 Paris (FR)

Courier Press, Leamington Spa, England.

## Description

La présente invention concerne d'une façon générale les réacteurs nucléaires du type à eau sous pression dits PWR, qui comportent, de manière connue, un circuit primaire ci-dessous dénommé RCP contenant l'eau sous pression et composé d'une cuve, qui enferme le coeur nucléaire, et de boucles externes de refroidissement, chacune comportant au moins une pompe et un générateur de vapeur, ci-dessous denommé GV, du type à tubes primaires raccordés à une boîte d'entrée et une boîte de sortie. Sur la branche chaude d'une des boucles de refroidissement, entre la cuve et le GV, est connecté un presuriseur à vapeur, ballon dans lequel l'eau du RCP est chauffée à une température plus élevée que celle du coeur, avec un niveau libre de vapeur, pour maintenir dans le circuit une pression supérieure à la pression de vapeur saturante dans le coeur et empêcher l'ébullition. Ces réacteurs sont également pourvus d'une circuit de contrôle volumétrique et chimique, ci-dessous dénommé RCV, en dérivation sur les boucles de refroidissement, pour assurer l'ajustage du volume d'eau du RCP compte tenu des dilatations et celui de l'état chimique de l'eau, dans laquelle est dissous de l'acide borique. Ce circuit RCV soutire l'eau dans une branche froide du RCP entre la pompe et le réacteur, la conduit pour traitement dans un bâtiment distinct du bâtiment du réacteur, et la réinjecte d'une part directement dans une autre branche froide du RCV, d'autre part dans les joints de pompes pour assurer un barrage de fuites, et enfin dans un système d'aspersion auxiliaire de la chambre de vapeur du pressuriseur, système normalement fermé lorsque le système principal d'aspersion peut fonctionner, c'est-à-dire quand les pompes du RCP sont en marche. Au cours du traitement RCV, l'eau est refroidie et détendue à une pression absolue de l'ordre de 2 bars sous atmosphère d'hydrogène, ce qui permet un dégagement partiel des gaz dissous. Les gaz incondensables qui se forment par radiolyse au sein de l'eau au cours du fonctionnement normal du réacteur, ou qui s'échappent des éléments combustibles, se dissolvent dans l'eau et sont évacués de cette manière.

Pour la remise en marche du réacteur après un arrêt avec ouverture de cuve, on doit purger le RCP du gaz présent dans les divers points hauts. On utilise normalement des purges locales, mais non placées à tous les points hauts, actionnées manuellement au cours de quelques cyclages de pression et de température, hors puissance nucléaire. Il y aurait avantage, pour accélérer cette opération, à disposer d'un système de purge susceptible de fonctionner pendant le démarrage et la marche en puissance du réacteur, et assurant la collecte de tous les points hauts.

Le système de purge existant est surtout insuffisant quand on considère des accidents tels que celui survenu à la centrale de Three Mile Island en Avril 1979, où un défaut de refroidissement du coeur a donné lieu à une production importante de gaz incondensables, par réaction entre l'eau et le métal de gainage du combustible. Il est très probable que si ce gaz avait pu être évacué à mesure qu'il était produit, la convention naturelle avec ébullition dans le coeur et condensation dans les générateurs de vapeur aurait suff; pour largement limiter la surchauffe du coeur et sa détérioration. Au lieu de cela, le gaz incondensable s'est accumulé dans les zones hautes du circuit et a bloqué la circulation d'eau ou de vapeur dès l'arrêt des pompes. Les poches de gaz en divers endroits ont d'autre part rendu inintelligible à l'opératuer le comportement de son circuit, ce qui l'a dissuadé d'y remettre l'eau qui était nécessaire.

Il s'agissait dans cet accident d'un réacteur à générateurs de vapeur droits, où la crosse que forme la canalisation chaude d'alimentation, et la boîte d'entrée du GV, constituent une zone haute dont la possibilité de purge est évidente. D'autres réacteurs PWR comportent des GV à tubes primaires en U renversé, connectés à des boîtes basses accolées d'entrée et de sortie. Dans un tel GV, des bulles charriées par l'eau primaire rentreraient dans les tubes et ressortiraient dans la boîte froide sous l'effet du pompage; à l'arrêt de celui-ci le gaz accumulé remonterait dans les tubes et bloquerait également la circulation naturelle.

Dans l'art antérieur, on connaît notamment le GB—A—131 548. Ce brevet décrit un réacteur nucléaire du type PWR équipe d'un pressuriseur et d'une installation permettant de pallier dans une certaine mesure, les défauts de pompage de la circulation dans le circuit primaire de réfrigération. L'installation décrite comporte au sommet du pressuriseur un échangeur de chaleur permettant le refroidissement et la condensation de la vapeur du circuit primaire en cas de besoin. En revanche, le sommet du pressuriseur ne comporte aucun conduit d'évacuation des gaz incondensables dont on vient de rappeler la présence possible et très indésirable dans le circuit primaire. En résumé par conséquent, ce brevet britannique décrit un système de refroidissement-condensation à l'exclusion de tout système de purge des gaz indésirables.

La présente invention a pour but principal de procurer, sur le circuit primaire des réacteurs à eau sous pression, une évacuation des gaz dégagés accidentellement, de manière à sauvegarder la possibilité de mise en convection naturelle. Un but secondaire est de simplifier la remise en marche après ouverture du circuit primaire. On désire également modifier aussi peu que possible les dispositions précédemment adoptées pour les circuits primaires.

A cet effet, l'invention a pour objet un dispositif de purge du circuit primaire d'un réacteur à eau sous pression, comprenant de façon connue la cuve du réacteur proprement dit, un pressuriseur à vapeur avec chauffage auxiliaire destiné à maintenir dans ledit circuit une pression empêchant l'ébullition, et au moins un générateur de vapeur du type à tubes primaires entre une boîte d'entrée et une boîte de sortie, ainsi qu'un circuit de contrôle volumétrique et chimique RCV, en dérivation sur le circuit primaire, caractérisé en ce que le pressuriseur comporte en sa partie supérieure un conduit d'évacuation vers l'extérieur des gaz incondensables et un système de refroidissement, constituant ainsi un condenseur vis-à-vis du mélange de vapeur et de gaz incondensables issus du pressuriseur, et permettant le retour par gravité au pressuriseur de l'eau condensée, le pressuriseur étant adapté par ailleurs à servir d'organe de collecte des gaz pour la partie chaude du circuit primaire, grâce à un ensemble de tuyauteries ascendantes reliant les points hauts de ce circuit à l'espace supérieur interne du pressuriseur.

On voit que selon l'invention plusieurs zones hautes de circuit primaire, et non seulement celle constituée par le pressuriseur lui-même, sont purgées de leur gaz en direction de l'espace de vapeur du pressuriseur. D'autres avantages de la solution sont les suivants:

— utilisant un autre système de purge, sans passage par le pressuriseur, on créerait de nouveaux niveaux libres, avec des possibilités d'oscillations hydropneumatiques et de méconnaissance de la situation du circuit;

— on ajouterait des vannes, donc des risques d'incidents et de coups de bélier, et des nécessités de maintenance dans des lieux moins accessibles que le sommet du pressuriseur;

— le grand volume tampon constitué par le pressuriseur amortit l'effet des phénomènes brutaux; .

— le système d'évacuation du gaz du pressuriseur est à installer de toute manière puisque le pressuriseur est branché sur une canalisation susceptible de charrier du gaz;

— ce système d'évacuation remplace en partie des vannes existant sur les pressuriseurs actuels, reliant le volume de vapeur à un ballon de décharge du pressuriseur.

On décrira d'abord le système de collecte des gaz vers le pressuriseur, puis le système d'évacuation des gaz du pressuriseur.

Une zone haute très importante est constituée par le sommet du couvercle de cuve et par les enveloppes des mécanismes qui lui sont attachés. Une canalisation d'évent pour cette zone ne peut pratiquement s'épanouir sur tous les sommets de ces enveloppes; on implantera donc la canalisation près du sommet du couvercle, ou sur l'enveloppe d'un mécanisme central, les débouchés des autres enveloppes étant éventuellement pourvus de jupes déflectrices de type connu limitant l'ascension des bulles dans ces enveloppes. La canalisation suit un trajet ascendant jusqu'au pressuriseur et peut s'y brancher soit en position basse, dans la zone la plus froide du pressuriseur correspondant à la température en sommet de cuve, soit au contraire en position haute sur le volume de vapeur. Dans le premier cas un certain débit d'eau traverse normalement cette canalisation, du fait de la perte de charge dans la boucle de refroidissement, et entraîne les bulles vers le pressuriseur; le diamètre de la canalisation peut être petit, par exemple 20 à 40 mm. Dans le second cas, l'eau s'équilibre sous un niveau libre dans la canalisation, sensiblement à l'horizontale du niveau dans le pressuriseur, tandis que très peu de vapeur en provenance du pressuriseur vient se condenser dans la conduite calorifugée. Le diamètre de la canalisation peut être plus grand puisqu'il n'y a pas de débit d'eau et de risques associés de chocs thermiques. Dans les deux cas, la canalisation d'évent doit être branchée ou débranchée lors des manoeuvres portant sur le couvercle de cuve.

D'autres zones hautes sont constituées par les boîtes d'entrée des générateurs de vapeur.

Dans le cas des réacteurs PWR actuels à GV droits, la boîte d'entrée est plus haute que le sommet du pressuriseur; une amélioration consiste à relever le pressuriseur de telle manière qu'une canalisation ascendante puisse relier le point haut de cette boîte (ou de sa crosse d'alimentation) à l'espace de vapeur du pressuriseur. Comme pour le couvercle de cuve, il s'établira un niveau libre dans cette canalisation et les gaz pourront se dégager vers le pressuriseur. Il ne paraît pas nécessaire de purger également la boîte de sortie des GV, car très peu de gaz est susceptible d'être entraîné vers le bas, et en cas d'arrêt des pompes ce gaz remonterait dans la boîte d'entrée et en serait purgé.

Dans le cas des réacteurs PWR actuels à GV à tubes en U renversé, des bulles de gaz charriées par l'eau primaire et arrivant dans une boîte d'entrée de GV seront vraisemblablement entraînées vers la plaque à tubes qui forme le plafond de la boîte, et passeront dans les tubes. On peut cependant tenter d'en retenir une partie et de l'envoyer au pressuriseur. On remarque d'abord que le taux de bulles sera maximal au voisinage d'une certaine génératrice de la tubulure d'entrée, proche de la génératrice supérieure. Les filets d'eau de la zone correspondante peuvent être déviés par un baffle formant écope et envoyés dans une cloche à l'intérieur de la boîte, le sommet de cette cloche étant relié au pressuriseur.

Selon une autre disposition, on pourrait profiter de l'arrivée dissymétrique de l'eau dans la boîte d'entrée pour y favoriser un mouvement de rotation dont l'axe arrive sur la paroi hémisphérique de la boîte et non sur la plaque à tubes, les bulles se concentrant dans la zone axiale et se trouvant également prélevées près de la paroi par l'intermédiaire d'une cloche.

Il est encore possible de remplacer la canalisation de diamètre important (Ø 365 mm par exemple), qui relie le pressuriseur à l'une des boucles, par des canalisations de moindre diamètre (Ø 200 mm par exemple) reliant le pressuriseur à chacune des boîtes chaudes. Une telle canalisation devrait être implantée aussi haut que possible sur la paroi de boîte, pour que les bulles défléchies par les systèmes de baffles puissent s'y engouffrer directement dans leur trajet ascendant. La difficulté réside dans le fait que la pénétration en diamètre relativement important devrait ainsi se trouver dans la zone de raccordement entre la plaque à tubes et la paroi de boîte, ce qui est peu réalisable. En revanche, un conduit de faible diamètre peut être foré en biais entre la base de la plaque à tubes et sa surface latérale, sans inconvénient mécanique notable. Pour ces raisons, on envisage surtout dans l'invention des canalisations de faible diamètre entre les boîtes d'entrée des GV et le pressuriseur, ces canalisations connectant, à l'intérieur des boîtes, des cloches d'accumulation de gaz.

Pour ces réacteurs à GV à tubes en U renversé, il est cependant plus important de purger les boîtes de sortie où le gaz risque de s'accumuler. On constate qu'en marche normale, la pression dans cette boîte est inférieure d'environ 15 m d'eau à celle qui règne dans l'espace de vapeur du pressuriseur; la possibilité d'un éventage direct vers le pressuriseur, sans retour du gaz dans les tubes en U, n'existerait donc que pour une marche au ralenti des pompes. On ne peut d'autre part préconiser un relèvement de 15 m du pressuriseur, car les canalisations de connexion ne doivent pas être trop longues. Dans ces conditions, on est obligé de prévoir une installation distincte pour la purge de ces boîtes. L'installation la plus simple consiste en un tube ascendant connecté aussi haut que possible sur la boîte et relié à un ballon froid muni d'un détecteur de niveau et d'une vanne supérieure de vidange vers l'installation de traitement et stockage des gaz.

La collecte des gaz dans les boîtes d'entrée et de sortie dont la plaque à tubes constitue le plafond est d'autre part favorisée si cette plaque est bombée vers le bas, favorisant ainsi le passage du gaz dans les tubes implantés le long de la périphérie et non dans ceux implantés près du centre. En cas de purge incomplète, du gaz pourra, à l'arrêt des pompes, désamorcer les tubes périphériques mais non les autres. On pourrait aussi penser à prolonger vers le bas les débouchés de tous les tubes, créant une couche supérieure de piégeage, mais la réalisation de ces prolongements paraît trop difficile.

On décrira maintenant le système d'évacuation des gaz du pressuriseur, ce système ayant pour objet de refroidir le mélange de vapeur et de gaz, de renvoyer l'eau condensée vers le circuit primaire et d'acheminer les gaz incondensables et leur vapeur résiduelle vers un récipient de stockage à pression moyenne situé à l'intérieur du bâtiment de confinement du réacteur, de manière que les incidents éventuels ne se traduisent pas par des relâchements externes de gaz radioactifs.

A cet effet, le pressuriseur est donc muni dans sa partie supérieure d'un conduit d'évacuation sur lequel est interposé un refroidisseur, l'eau condensée s'écoulant gravitairement à contre-courant vers le pressuriseur.

Dans sa forme la plus simple, ce refroidisseur serait constitué par un tube ascendant non isolé dans l'air, aboutissant par un orifice de décharge et une vanne de coupure à un ballon de stockage.

Cependant, pour parer rapidement des accidents importants, on pourra utiliser pour le refroidissement une eau initialement froide, par exemple celle de l'installation existante de douchage auxiliaire du pressuriseur, qui doit rentrer dans le RCP. Le refroidisseur peut être du type à serpentin, l'eau réchauffée s'écoulant finalement par la pomme de la douche auxiliaire du pressuriseur, ou du type à contact, comportant un massif de contact constitué par exemple d'anneaux Raschig, parcouru de bas en haut par le mélange de vapeur et de gaz, et de haut en bas par l'eau de refroidissement. Le débit d'eau de refroidissement doit bien entendu correspondre approximativement à ce qui est nécessaire pour condenser le débit de vapeur qui s'échappe. Le contrôle du bon réglage peut être obtenu au moyen de sondes de température disposées dans la zone haute et la zone basse du refroidisseur: la zone haute doit être suffisamment froide et la zone basse suffisamment chaude. Il paraît indiqué de fixer le débit d'eau de refroidissement et de régler en conséquence le débit de gaz résiduel, avec une mesure de celui-ci.

Le ballon de stockage où arrive le gaz avec de la vapeur résiduelle sera avantageusement muni d'un système catalytique d'oxydation de l'hydrogène et du tritium, pour réduire le volume gazeux. L'eau condensée pourra être évacuée, par exemple vers une ligne de drainage existante recueillant des fuites de joints de vannes. Le ballon sera dimensionné, en volume et en pression admissible, de manière à parer par exemple un dégagement d'hydrogène correspondant à l'oxydation de toutes les gaines du combustible.

On rappelle que dans les installations actuelles, il existe un dispositif de décharge du pressuriseur, comportant un ensemble de vannes télécommandées et un ensemble de soupapes tarées de sûreté, reliant le volume de vapeur du pressuriseur à un ballon de décharge muni d'un arrosage interne pour condenser la vapeur. Les vannes télécommandées sont actionnées automatiquement lorsque le système de douchage à l'intérieur du pressuriseur est insuffisant pour limiter une montée transitoire en pression. L'accident de Three Mile Island a montré que le ballon de décharge était insuffisant lorsqu'une vanne restait bloquée ouverte. Il est évidemment intéressant de faire jouer à ce ballon de décharge le rôle du ballon de stockage selon l'invention, le dispositif d'évacuation des gaz étant alors branché sur ce ballon de décharge et sa vanne d'ouverture, avec refroidissement simultané, étant actionnée en priorité par rapport aux autres vannes en cas d'élévation intempestive de pression. Le système est alors équivalent à un douchage supplémentaire et peut éviter le remplissage du ballon de décharge. Bien entendu, il convient en plus de s'assurer que les douchages internes et le dispositif selon l'invention ont ensemble une puissance de refroidissement suffisante pour que l'on évite très généralement l'ouverture des autres vannes.

L'invention sera mieux comprise à la lecture qui suit de divers exemples de mise en oeuvre du dispositif de purge objet de l'invention, exemples qui seront décrits à titre illustratif et non limitatif en se référant aux figures 1 à 4 ci-jointes sur lesquelles:

— la figure 1 représente schématiquement l'ensemble du circuit primaire d'un réacteur du type à générateurs de vapeur droits, muni d'un dispositif de purge selon l'invention;

— la figure 2 représente l'ensemble du circuit primaire d'un réacteur du type à générateurs de vapeur à tubes en U renversé, muni d'un dispositif de purge selon l'invention;

— la figure 3 représente le sommet d'un pressuriseur muni d'un dispositif de purge selon l'invention;

— la figure 4 représente la base d'un générateur de vapeur du type à tubes en U renversé, équipé de dispositifs de collecte du gaz selon l'invention.

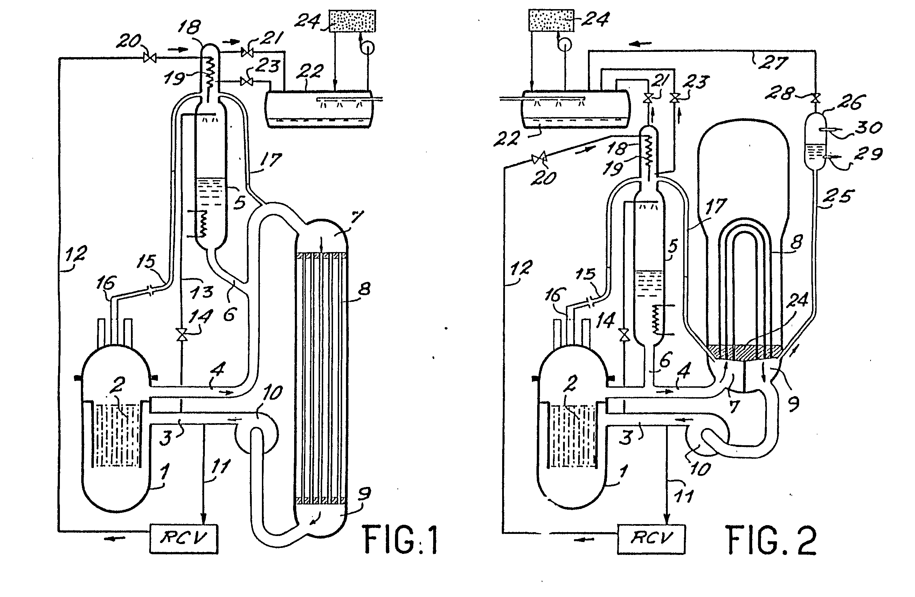

Sur la figure 1 sont représentés la cuve 1 du réacteur nucléaire à eau sous pression, à générateurs de vapeur droits, le coeur 2, la canalisation 3 dite froide d'entrée d'eau primaire dans la cuve, la canalisation 4 dite chaude de sortie d'eau primaire, le pressuriseur 5 et sa jonction 6 avec la canalisation 4, la boîte d'entrée 7 du générateur de vapeur, le faisceau de tubes 8 transmettant la chaleur au circuit secondaire, la boîte de sortie 9 du générateur de vapeur, la pompe 10, la canalisation 11 de prélèvement vers le circuit RCV et une canalisation 12 de retour du RCV, la canalisation 13 de prélèvement sur la canalisation 3 pour le douchage du pressuriseur, et sa vanne de réglage 14. Une canalisation ascendante 15, pourvue d'une bride de déconnexion, relie une des enveloppes 16 de mécanismes sur le couvercle de la cuve 1, au volume de vapeur du pressuriseur. Une canalisation ascendante 17 relie le point haut de la canalisation 4 à ce même volume de vapeur, le pressuriseur étant placé suffisamment haut pour que des surfaces de séparation eau-vapeur s'établissent dans les canalisations 15 et 17, en équilibre de niveau avec celles existant dans le pressuriseur. Un échangeur condenseur 18 est implanté au sommet du pressuriseur 5; il comporte un serpentin 19 alimenté par la canalisation 12 à travers une vanne de réglage 20, son eau réchauffée retombant dans le pressuriseur. La sortie de l'échangeur 18, pourvue d'une vanne de réglage 21, est connectée au ballon de décharge 22. On a figuré une des autres canalisations 23 reliant le pressuriseur à ce ballon de décharge, selon l'art antérieur. Le ballon 22 est pourvu d'une installation 24 de recombinaison catalytique de l'hydrogène.

Sur la figure 2 sont représentés, avec la même numérotation, les éléments correspondants d'un réacteur nucléaire à eau sous pression à générateur de vapeur avec tubes en U renversé. Les différences portent sur la collecte des boîtes d'entrée et de sortie du générateur. La boîte d'entrée 7 est munie d'une canalisation de collecte 17 branchée aussi haut que possible au voisinage de la plaque à tubes 24 et arrivant au pressuriseur, tandis que la boîte de sortie 9 est dotée d'une nouvelle canalisation ascendante 25, également branchée aussi haut que possible, aboutissant à un ballon de dégazage 26 normalement froid, vidangé en partie supérieure par une canalisation 27 munie d'une vanne 28 et aboutissant au ballon 22 de stockage gazeux. Des sondes de niveau 29 et 30 dans le ballon 26 permettent de piloter la vanne 28 pour maintenir un niveau libre dans ce ballon.

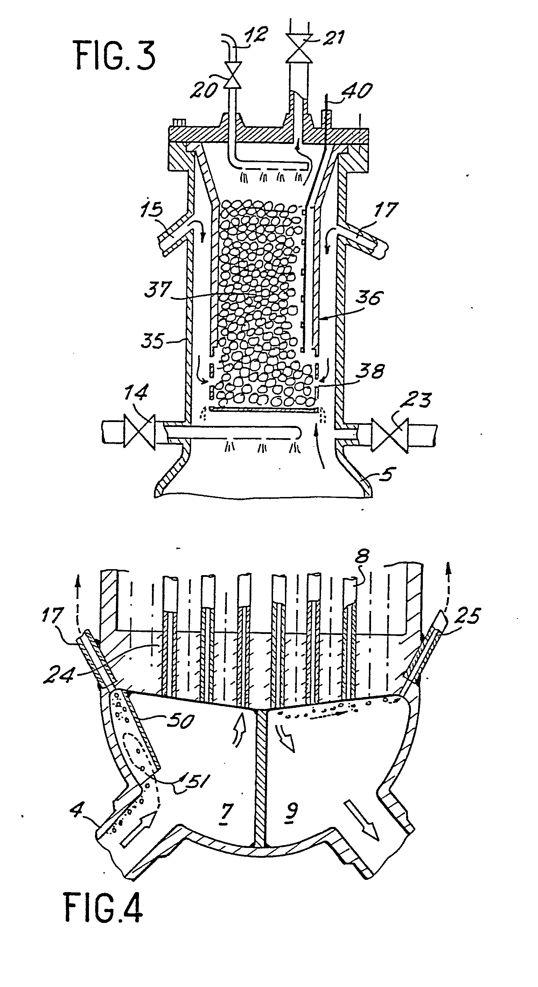

La figure 3 représente le sommet du pressuriseur équipé, en variante, d'un condenseur du type à contact. La virole principale du pressuriseur 5 est prolongée vers le haut par un corps cylindrique 35 de diamètre plus faible sur lequel débouchent les canalisations de purge 15 et 17. Le condenseur est constitué par un panier 36, suspendu sous le couvercle du corps 35, et dans lequel le massif de contact 37 est constitué d'éléments de contact tels que des anneaux Raschig. La canalisation 12 traverse ce couvercle et permet l'arrosage du massif 37; l'eau s'échappe à la base du panier 36 par un grillage latéral 38. Lors du fonctionnement, le gaz provenant des canalisations 15 et 17 est ainsi susceptible de rentrer dans le panier par le grillage 38 en se mélangeant relativement peu à la vapeur du pressuriseur. Le gaz asséché sort au sommet du couvercle par la vanne 21. La température dans le massif est surveillée à divers niveaux par des sondes 40, ce qui permet de déterminer la tranche d'épaisseur sur laquelle se produit effectivement la condensation et de la maintenir entre des limites convenables par action sur les vannes 20 et 21.

La figure 4 représente la partie inférieure du générateur de vapeur à tubes en U renversé, correspondant à la figure 2, avec l'option d'une plaque à tubes 24 bombée vers le bas, de manière à écarter vers la périphérie les gaz susceptibles de s'accumuler dans les boîtes 7 et 9. On a figuré un exemple de baffle 50 susceptible de piéger au moins une partie des bulles charriées par le courant d'eau primaire débouchant dans la boîte 7, par la canalisation 4, et concentrées selon la génératrice supérieure de cette dernière. A cet effet, le baffle 50 forme une écope au-dessus du débouché de la canalisation 4 et se raccorde au débouché de la canalisation 17. L'eau captée par cette écope laisse monter ses bulles et redescend vers le débit principal de part et d'autre du débouché de la canalisation 4, selon la flèche 51. Les canalisations 17 et 25 pénètrent dans les boîtes par des forages obliques dans l'épaisseur de la plaque à tubes, évitant la zone à concentration de contrainte formée par le raccordement de cette plaque à l'hémisphère inférieur. Ces forages sont tubés d'acier inoxydable raccordé par soudure au revêtement interne des boîtes et aux canalisations elles-mêmes, puisque toutes les parois en contact avec l'eau du RCP doivent être inoxydables.

On voit donc que le dispositif de purge du circuit primaire, objet de l'invention, permet de pallier de façon simple les difficultés de dégazage se manifestant sur les réacteurs nucléaires à eau sous pression, ce qui présente le grand intérêt d'assurer la permanence de la circulation naturelle dans le circuit primaire en cas de formation de gaz dans le circuit et de défaillance des pompes primaires. La mise en oeuvre du dispositif, objet de l'invention, présente encore un certain nombre d'avantages supplémentaires parmi lesquels on peut citer:

— une économie de temps lors des arrêts nécessités par l'entretien ou le rechargement du réacteur, puisque les problèmes de dégazage n'interviennent plus lors du remplissage du circuit;

— une indication fiable de la quantité d'eau présente dans le circuit, d'après la mesure du niveau au pressuriseur, puisque les accumulations de gaz en d'autres zones du circuit sont supprimées, ce qui permet d'assurer le pilotage en connaissance de cause et en particulier le rechargement en eau si une fuite indétectée s'est produite;

— le stockage des gaz radioactifs à l'intérieur de l'enceinte de confinement du réacteur, dans un ballon prévu à cet effet, directement à la pression de stockage sans passage intermédiaire.

## Revendications

1. Dispositif de purge du circuit primaire (3, 4, 7, 9, 10) d'un réacteur à eau sous pression, comprenant de façon connue la cuve (1) du réacteur proprement dit, un pressuriseur à vapeur (5) avec chauffage auxiliaire destiné à maintenir dans ledit circuit une pression empêchant l'ébullition, et au moins un générateur de vapeur (7, 8, 9) du type à tubes primaires (8) entre une boîte d'entrée (7) et une boîte de sortie (9), ainsi qu'un circuit de contrôle volumétrique et chimique (RCV) en dérivation sur le circuit primaire, caractérisé en ce que le pressuriseur (5) comporte en sa partie supérieure un conduit (21) d'évacuation vers l'extérieur des gaz incondensables et un système de refroidissement, constituant ainsi un condenseur (18, 19) vis-à-vis du mélange de vapeur et de gaz incondensables issus du pressuriseur (5), et permettant le retour par gravité au pressuriseur (5) de l'eau condensée, le pressuriseur (5) étant adapté par ailleurs à servir d'organe de collecte des gaz pour la partie chaude du circuit primaire, grâce à un ensemble de tuyauteries ascendantes (15, 17) reliant les points hauts de ce circuit à l'espace supérieur interne du pressuriseur (5).

2. Dispositif selon la revendication 1, caractérisé en ce qu'une canalisation ascendante relie le sommet du couvercle du réacteur à un point de la paroi du pressuriseur.

3. Dispositif selon la revendication 1, le réacteur étant du type à générateurs de vapeur droits, caractérisé en ce que le pressuriseur est placé à un niveau suffisamment élevé pour qu'une canalisation ascendante relie le point haut du circuit (à l'entrée du générateur de vapeur) avec un point de la paroi du pressuriseur.

4. Dispositif selon la revendication 1, le réacteur étant du type à générateurs de vapeur à tubes en U renversé, caractérisé en ce qu'une canalisation ascendante relie la partie haute de la boîte d'entrée, près de la plaque à tubes, avec un point de la paroi du pressuriseur.

5. Dispositif selon la revendication 4, caractérisé en ce que des déflecteurs à l'intérieur de la boîte d'entrée favorisent la concentration des bulles de gaz charriées par le courant d'eau, vers une cloche de collecte reliée à la canalisation ascendante.

6. Dispositif selon la revendication 1, le réacteur étant du type à générateurs de vapeur à tubes en U renversé, caractérisé en ce qu'une canalisation ascendante relie la partie haute de la boîte de sortie à un ballon de dégazage muni d'une vanne supérieure de vidange des gaz.

7. Dispositif selon la revendication 6, caractérisé en ce que la plaque à tubes du générateur de vapeur est bombée vers le bas.

8. Dispositif selon l'une quelconque des revendications 2 à 4, caractérisé en ce que les diverses canalisations ascendantes sont collectées avant leur liaison avec le pressuriseur.

9. Dispositif selon la revendication 1, caractérisé en ce que le système de refroidissement est un échangeur à parois métalliques, un circuit étant parcouru dans le sens ascendant par le mélange de gaz et de vapeur à condenser, et l'autre circuit dans le sens descendant par de l'eau initialement froide.

10. Dispositif selon la revendication 1, caractérisé en ce que le système de refroidissement est un échangeur à contact, parcouru dans le sens ascendant par le mélange de gaz et de vapeur à condenser, et dans le sens descendant par l'eau de refroidissement et l'eau condensée.

11. Dispositif selon la revendication 1, caractérisé en ce que des sondes de température sont implantées à la base et au sommet du système de refroidissement, leurs indications étant utilisées pour le pilotage de la vanne de décharge située au sommet du conduit d'évacuation.

12. Dispositif selon la revendication 1, caractérisé en ce que le conduit d'évacuation aboutit à un récipient de stockage des gaz équipé d'un système de recombinaison catalytique de l'hydrogène.

## Patentansprüche

1. Druckentlastungsvorrichtung für den primären Kreislauf (3, 4, 7, 9, 10) eines Druckwasserreaktors, enthaltend in bekannter Weise das eigentliche Reaktorgehäuse (1), einen mit einer Hilfsheizeinrichtung versehenen Dampfdruckerzeuger (5), der dazu bestimmt ist, in dem Kreislauf einen Druck aufrechtzuerhalten, der das Sieden verhindert, und wenigstens einen Dampferzeuger (7, 8, 9) vom Typ mit Primärrohren (8) zwischen einem Eintrittsverteiler (7) und einem Austrittssammler (9) sowie einen vom primären Kreislauf abzweigenden volumetrischen und chemischen Steuerkreis (RVC), dadurch gekennzeichnet, daß der Druckerzeuger (5) in seinem oberen Bereich eine Leitung (21) zum Abziehen nicht kondensierbarer Gase nach außen und ein Rückkühlsystem aufweist, bestehend aus einem Kondensator (18, 19), der dem Gemisch aus Dampf und nicht kondensierbaren Gasen, die vom Druckerzeuger (5) abgegeben werden, gegenübersteht und der die Rückführung kondensierten Wassers unter Schwerkraftwirkung zum Druckerzeuger (5) erlaubt, und daß der Druckerzeuger (5) weiterhin dazu eingerichtet ist, als Gassammeleinrichtung für den heißen Bereich des primären Kreislaufs zu dienen aufgrund einer Steigrohranordnung (15, 17), die die oberen Punkte des Kreislaufs mit dem oberen Innenraum des Druckerzeugers (5) verbindet.

2. Vorrichtung nach Anspruch 1, dadurch gekennzeichnet, daß ein aufsteigendes Kanalsystem den obersten Punkt des Reaktordeckels mit einem Punkt der Wand des Druckerzeugers verbindet.

3. Vorrichtung nach Anspruch 1, bei der der Reaktor vom Typ der aufrecht stehenden Dampferzeuger ist, dadurch gekennzeichnet, daß der Druckerzeuger in einem Höhenniveau angeordnet ist, das ausreichend hoch ist, damit ein aufsteigendes Kanalsystem den oberen Punkt des Kreislaufs (am Eingang des Dampferzeugers) mit einem Punkt der Wand des Druckerzeugers verbindet.

4. Vorrichtung nach Anspruch 1, bei der der Reaktor vom Typ der Dampferzeuger mit umgekehrten U-Rohren ist, dadurch gekennzeichnet, daß ein aufsteigendes Kanalsystem den oberen Punkt des Eintrittsverteilers nahe der Rohrplatte mit einem Punkt der Wand des Druckerzeugers verbindet.

5. Vorrichtung nach Anspruch 4, dadurch gekennzeichnet, daß Ablenkeinrichtungen im Innern des Eintrittsverteilers die Konzentration der vom Wasserstrom mitgeführten Gasbläschen in Richtung auf eine Sammelglocke begünstigen, die mit dem aufsteigenden Kanalsystem verbunden ist.

6. Vorrichtung nach Anspruch 1, wobei der Reaktor vom Typ der Dampferzeuger mit umgekehrten U-Rohren ist, dadurch gekennzeichnet, daß ein aufsteigendes Kanalsystem den oberen Bereich des Eintrittsverteilers mit einem Entgasungsballon verbindet, der mit einem oberen Schieber zum Auslaß der Gase versehen ist.

7. Vorrichtung nach Anspruch 6, dadurch gekennzeichnet, daß die Rohrplatte des Dampferzeugers nach unten gewölbt ist.

8. Vorrichtung nach einem der Ansprüche 2 bis 4, dadurch gekennzeichnet, daß die verschiedenen aufsteigenden Kanäle zusammengeführt sind, bevor sie mit dem Druckerzeuger verbunden sind.

9. Vorrichtung nach Anspruch 1, dadurch gekennzeichnet, daß das Rückkühlsystem ein Wärmetauscher mit metallischen Wänden ist, in welchem ein Kreislauf, bestehend aus der Mischung aus Gas und zu kondensierendem Dampf in aufsteigendem Sinne und der andere Kreislauf bestehend aus anfänglich kaltem Wasser in absteigendem Sinne durch den Wärmetauscher geführt sind.

10. Vorrichtung nach Anspruch 1, dadurch gekennzeichnet, daß das Rückkühlsystem ein Kontaktwärmetauscher ist, der in aufsteigendem Sinne von der Mischung aus Gas und zu kondierendem Dampf und in absteigendem Sinne von Kühlwasser und Kondensatwasser durchquert ist.

11. Vorrichtung nach Anspruch 1, dadurch gekennzeichnet, daß Temperatursonden an der Basis und am höchsten Punkt des Rückkühlsystems angeordnet sind, deren Signale für die Steuerung des Ablaßschiebers verwendet sind, der am höchsten Punkt der Abzugsleitung angeordnet ist.

12. Vorrichtung nach Anspruch 1, dadurch gekennzeichnet, daß die Abzugsleitung in einen Gasspeicherbehälter mündet, der mit einem System zur katalytischen Rekombination des Wasserstoffs ausgerüstet ist.

Claims

1. Pressure-discharge device for the primary circuit (3, 4, 7, 9, 10) of a pressurized water reactor, comprising in known manner the reactor vessel (1), a steam pressurizer (5) with auxiliary heating, for maintaining a boiling-preventing pressure within said circuit, and at least one steam generator (7, 8, 9) of the type having primary tubes (8) between an inlet manifold (7) and an outlet manifold (9), as well as a circuit for controlling volumetric and chemical constitution (RCV) shunted from the primary circuit, characterized in that the pressurizer (5) has in its upper part a conduit (21) for externally evacuating noncondensible gas, and a cooling system, thereby constituting a condenser (18, 19) for a mixture of steam and non-condensible gas leaving the pressurizer (5), and permitting condensed water to return under gravity to the pressurizer (5), said pressurizer (5) being additionally adapted to act as collecting device for gases from the hot portion of the primary circuit, because of an assembly of riser channels (15, 17) connecting the high points of said circuit to the internal upper part of the pressurizer (5).

2. Device according to Claim 1, characterized in that a riser channel connects the top of the reactor cover to a point on the wall of the pressurizer.

3. Device according to Claim 1, the reactor being of the direct steam generator type, characterized in that the pressurizer is located at a sufficiently high level for a riser channel to connect the high point of the circuit (at the inlet of the steam generator) with a point on the wall of the pressurizer.

4. Device according to Claim 1, the reactor being of the type with a steam generator having inverted U-tubes, characterized in that a riser channel connects the upper part of the inlet manifold near the tube plate with a point on the wall of the pressurizer.

5. Device according to Claim 4, characterized in that deflector members internally of the inlet manifold favour concentration of gas bubbles transported by the water current, towards a collector bell connected to the riser channel.

6. Device according to Claim 1, the reactor being of the type having a steam generator with inverted U-tubes, characterized in that a riser channel connects the high part of the outlet manifold to a degasification vessel having an upper gas-discharge valve.

7. Device according to Claim 6, characterized in that the tube plate of the steam generator is outwardly directed at the bottom.

8. Device according to any one of Claims 2 to 4, characterized in that the various riser channels are collected before they connect with the pressurizer.

9. Device according to Claim 1, characterized in that the cooling system is an exchanger having metal walls, one circuit being traversed in the ascending sense by the mixture of gas and steam to be condensed, and the other circuit in the descending sense by cold water.

10. Device according to Claim 1, characterized in that the cooling system is a contact exchanger, traversed in the ascending sense by the mixture of gas and steam to be condensed, and in the descending sense by cooling water and condensed water.

11. Device according to Claim 1, characterized in that temperature sensors are fixed at the bottom and top of the cooling system, their data being used to control the discharge valve at the top of the evacuation conduit.

12. Device according to Claim 1, characterized in that the evacuation conduit leads to a gas-storage container, provided with a catalytic hydrogenation system.

FIG.1

FIG.2

0 026 714

FIG. 3

FIG. 4